# EUROPEAN PATENT APPLICATION

(11) **EP 1 714 690 A1**
(43) Date of publication of application: **25.10.2006**
(21) Application number: 05709308.0
(22) Date of filing: 25.01.2005
(51) Int. Cl.: B01D 53/68, B01J 20/04

(54) **EXHAUST GAS TREATING AGENT, METHOD FOR TREATING EXHAUST GAS AND APPARATUS FOR TREATING EXHAUST GAS**

(30) Priority: 29.01.2004 JP 2004020976
(71) Applicant: Taiyo Nippon Sanso Corporation, Shinagawa-ku, Tokyo 1428558 (JP)
(72) Inventor: HASEGAWA, Hideharu; c/o TAIYO NIPPON SANSO CO., Shinagawa-ku, Tokyo 1428558 (JP); ISHIHARA, Yoshio; c/o TAIYO NIPPON SANSO CO., Shinagawa-ku, Tokyo 1428558 (JP); SUZUKI, Katsumasa; c/o TAIYO NIPPON SANSO CO., Shinagawa-ku, Tokyo 1428558 (JP)
(74) Representative: Smyth, Gyles Darren
(86) International application number: PCT/JP2005/000907
(87) International publication number: WO 2005/072853

(57) **Abstract**

The exhaust gas treatment agent of the present invention is an exhaust gas treatment agent provided with a particulate and porous structure, and composed of calcium hydroxide occupying at least a portion of the surface thereof, and calcium oxide occupying the remainder. The specific surface area if preferably 1 m²/g or more, and the void fraction is preferably 10 to 50% by volume. This calcium oxide is obtained by baking particulate calcium carbonate, and exhaust gas discharged from a semiconductor production device is removed of harmful gas components by allowing the exhaust gas to contact and react with this exhaust gas treatment agent while in the gaseous state.

## Description

### TECHNICAL FIELD

The present invention relates to an exhaust gas treatment agent for removing hydrides and halides, such as fluorides and chlorides (to be collective referred to as harmful gas components), of elements for which oxides thereof are solids contained in exhaust gas discharged from a semiconductor production device and so forth, and a treatment method and treatment device using the same.

The present application claims priority of Japanese Patent Application No. 2004-020976, filed on January 29, 2004, the content of which is incorporated herein by reference.

### BACKGROUND ART

Exhaust gas discharged from semiconductor production devices contains halide gas, such as fluorides in the manner of CF₄, C₂F₆, SiF₄ and SF₆ and chlorides in the manner of BCl₃ and AsCl₅, and metal hydride gas such as PH₃, SiH₄, GeH₄ and AsH₃.

Since these fluoride, chloride and other halide gases and metal hydride gases are harmful, it is necessary to remove these harmful gas components when discharging exhaust gas to the outside. Consequently, methods have been proposed in the prior art for removing these harmful gas components using various adsorbents.

However, in the case of methods using adsorbents, since physical and chemical adsorption reactions on the surface of the adsorbent constitute the primary reactions, the throughput per unit weight of adsorbent is low, thereby requiring a large amount of adsorbent. In addition, in the case of disposing of the adsorbent after treatment as waste, there was also the disadvantage of requiring special waste treatment to prevent recontamination resulting from elimination of previously adsorbed harmful gas components. On the other hand, although removal using a reaction agent has also been proposed, since reaction removal consists primarily of a reaction extending only to the surface layer measuring several atoms thick, the throughput per unit weight of reaction agent is again low, thereby requiring a large amount of reaction agent.

In order to solve this problem, Japanese Unexamined Patent Application, First Publication No. H10-15349 discloses a reaction agent composed of a carbonaceous solid material such as coal or activated charcoal, and gallium, strontium or other alkaline earth metal compound.

However, since this reaction agent is blended with nearly equal amounts of carbonaceous solid material and alkaline earth metal, even if the reaction efficiency of the alkaline earth metal is, for example, about 90%, the reaction efficiency of the reaction agent overall is less than 50%, and as a result, there was the problem of the reaction agent having a high replacement frequency.

[Patent Document 1] Japanese Unexamined Patent Application, First Publication No. H10-15349

### DISCLOSURE OF THE INVENTION

Accordingly, an object of the present invention is to provide an exhaust gas treatment agent for removing harmful gas components contained in exhaust gas discharged from semiconductor production devices, which has a high throughput per unit weight of the treatment agent, is capable of treating a large amount of exhaust gas with a small amount of treatment agent, and which does not require any special waste treatment even when disposing of the treatment agent as waste following treatment.

In order to achieve the aforementioned object, a first aspect of the present invention is an exhaust gas treatment agent provided with a particulate and porous structure, composed of calcium hydroxide occupying at least a portion of the surface thereof, and calcium oxide occupying the remainder.

In the aforementioned exhaust gas treatment agent, the calcium hydroxide accounts for 20 to 70% by weight of the exhaust gas treatment agent.

The exhaust gas treatment agent preferably has a specific surface area of 1 m²/g or more.

The exhaust gas treatment agent preferably has a void fraction of 10 to 50% by volume.

The exhaust gas treatment agent is obtained by baking particulate calcium carbonate.

The exhaust gas treatment agent is obtained by baking calcium hydroxide molded into particulate form.

The exhaust gas treatment agent is obtained by converting calcium oxide to calcium hydroxide by a hydration reaction followed by baking.

A second aspect of the present invention is an exhaust gas treatment method comprising contacting the exhaust gas treatment agent of the aforementioned first aspect with exhaust gas containing a hydride and/or halide of an element belonging to group IIIb, group IVb or group Vb of the periodic table in a gaseous state.

A third aspect of the present invention is an exhaust gas treatment device provided with a reaction removal unit filled with the exhaust gas treatment agent of the aforementioned first aspect.

In the exhaust gas treatment device, the exhaust gas treatment agent is preferably filled at a porosity of 30 to 70% by volume.

Since the exhaust gas treatment agent of the present invention is porous, harmful gas components react and are removed by a chemical reaction even within micropores thereof. Consequently, a large amount of exhaust gas can be treated with a small amount of treatment agent. In addition, since the treatment agent uses a chemical reaction, the treatment agent following treatment is in the form of a stable, harmless calcium compound which does not require any special treatment during disposal, and can conversely be reused as a useful chemical raw material. Moreover, since the removal reaction is an exothermic reaction, it is not necessary to heat from the outside during treatment, thereby reducing energy costs. In addition, the structure of the treatment device is simple, thereby resulting in low equipment costs.

### BRIEF DESCRIPTION OF THE DRAWINGS

FIG. 1 is a schematic block diagram showing an example of an exhaust gas treatment device as claimed in the present invention;
FIG. 2A is the Ca2p spectrum prior to reaction of a calcium oxide agent containing less than 20% by weight of calcium hydroxide with COF₂;
FIG. 2B is the Ca2p spectrum after reaction of a calcium oxide agent containing less than 20% by weight of calcium hydroxide with COF₂;
FIG. 3A is the O1s spectrum prior to reaction of a calcium oxide reagent containing less than 20% by weight of calcium hydroxide with COF₂;
FIG. 3B is the O1s spectrum after reaction of a calcium oxide reagent containing less than 20% by weight of calcium hydroxide with COF₂;
FIG. 4A is the F1s spectrum prior to reaction of a calcium oxide reagent containing less than 20% by weight of calcium hydroxide with COF₂;
FIG. 4B is the F1s spectrum after reaction of a calcium oxide reagent containing less than 20% by weight of calcium hydroxide with COF₂;
FIG. 5A is the Ca2p spectrum prior to reaction of a calcium oxide reagent containing about 22% by weight of calcium hydroxide with COF₂;
FIG. 5B is the Ca2p spectrum after reaction of a calcium oxide reagent containing about 22% by weight of calcium hydroxide with COF₂;
FIG. 6A is the O1s spectrum prior to reaction of a calcium oxide reagent containing about 22% by weight of calcium hydroxide with COF₂;
FIG. 6B is the O1s spectrum after reaction of a calcium oxide reagent containing about 22% by weight of calcium hydroxide with COF₂;
FIG. 7A is the F1s spectrum prior to reaction of a calcium oxide reagent containing about 22% by weight of calcium hydroxide with COF₂;
FIG. 7B is the F1s spectrum after reaction of a calcium oxide reagent containing about 22% by weight of calcium hydroxide with COF₂;
FIG. 8A is a graph showing the data of Figs. 2A to 4B as the distribution of each component in the direction of depth;
FIG. 8B is a graph showing the data of Figs. 5A to 7B as the distribution of each component in the direction of depth; and
FIG. 9 is a graph showing the results of measuring impurities at a calcium agent outlet.

### BEST MODE FOR CARRYING OUT THE INVENTION

The exhaust gas treatment agent of the present invention is a mixture of calcium oxide and calcium hydroxide, in which the calcium content is 98% by weight, composed of 20 to less than 70% by weight of calcium hydroxide, 30% to less than 80% of calcium oxide, and 2% by weight or less of unavoidable impurities, and the form thereof is spherical or pellet-shaped grain. Furthermore, the grain diameter of the secondary grains which compose the spherical or pellet-shaped treatment agent is preferably 200 to 500 µm. If the grain size of the secondary grains is below the aforementioned range, since the secondary grains bond to each other, there is the risk of it being difficult to remove the thickener added, while if the grain size exceeds the aforementioned range, bonding between secondary grains becomes weak, thereby resulting in the risk of the treatment agent easily emitting dust.

In addition, the primary grains which compose the secondary grains preferably have a grain diameter of about 5 to 20 µm. If the grain diameter of the primary grains is below the aforementioned range, there is the risk of a considerable increase in cost in terms of industrial production, while if the grain size of the primary grains exceeds the aforementioned range, there is the risk of difficulty in producing fine secondary grains.

The primary grains have a continuous columnar structure, and the voids there between have a mutually continuous structure, namely in the manner of a mesh filter. Moreover, the primary grains are porous, having an infinite number of micropores opening into the surface thereof, and these micropores have a mutually continuous structure. As a result of having this primary grain structure, the exhaust gas treatment agent of the present invention has the characteristic of being resistant to dust generation.

In addition, this treatment agent has an extremely large substantial surface area, and has a specific surface area as determined by BET method of 1 m²/g or more. In addition, it has a void fraction of 10 to 50% by volume. Here, void fraction is represented by the ratio of the volume of all micropores to the apparent volume of all grains.

In addition, in this exhaust gas treatment agent, a portion of the surface of the micropores, including the inner surface, for example 10 to 80% in terms of the volume ratio, undergoes a hydration reaction due to moisture in the air resulting in the formation of calcium hydroxide, while the remaining 90 to 20% is calcium oxide, and the calcium hydroxide actually reacts with harmful gas components to remove them. Consequently, although calcium hydroxide is consumed as the treatment operation proceeds, since water is formed by the reaction with harmful gas components, and the water formed from this reaction newly forms calcium hydroxide from calcium oxide, there is no loss in throughput until all of the calcium oxide has changed into calcium hydroxide.

The calcium oxide serving as this type of treatment agent is obtained by baking particulate calcium carbonate. When carbon dioxide is eliminated, an infinite number of micropores are formed inside. Furthermore, during baking, treatment is suitably carried out at a temperature of about 1000°C in an oxidizing atmosphere.

In addition, the calcium oxide serving as this type of treatment agent can also be obtained by baking calcium hydroxide molded into a particulate form in order to release water. In this case, calcium hydroxide can be allowed to remain within the primary grains by suitably selecting the baking temperature and time.

Moreover, the calcium oxide serving as this type of treatment agent can also be obtained by converting calcium oxide to calcium hydroxide by a hydration reaction, and then rebaking. This is because by repeating oxidation and hydroxylation of calcium, micropores can be efficiently formed in the surface of the primary grains due to differences in molar volume while maintaining primary grain structure.

The exhaust gas treatment method of the present invention consists of contacting exhaust gas discharged from a semiconductor production device with the aforementioned exhaust gas treatment agent in the vapor phase while in a gaseous state. As a result, harmful gas components contained in the exhaust gas are removed by reacting with the calcium hydroxide on the surface of the exhaust gas treatment agent. Examples of harmful gas components in exhaust gas include hydrides and/or halides of elements belonging to group IIIb, group IVb or group Vb of the periodic table, such as B, Al, Ga, In, Si, Ge, P and As.

Examples of chemical reactions at this time are as shown below.

CF₄ + 2Ca(OH)₂ → 2CaF₂ + CO₂ + H₂O (1)

SiH₄ + Ca(OH)2 + 2O₂ → CaSiO₃ + 3H₂O (2)

2PH₃ + 3Ca(OH)₂ + 4O₂ → Ca₃(PO₄)₂ + 6H₂O (3)

The oxygen in reaction formulas (2) and (3) is separately supplied from the outside in the case it is not contained in the exhaust gas. The temperature at this time (treatment temperature) is preferably maintained at 400°C or lower. This is because if the temperature exceeds 400°C, the treatment agent degrades and the hydroxyl groups are destroyed.

In this manner, since these chemical reactions are exothermic, heating is not required during treatment, while on the contrary it is preferable to control the reactions at a predetermined temperature by cooling.

A semiconductor production device in the present invention refers to a device for producing semiconductor devices, flat panel displays, solar cells or magnetic thin plates and so forth which produces these products by using a chemical vapor deposition (CVD) reaction.

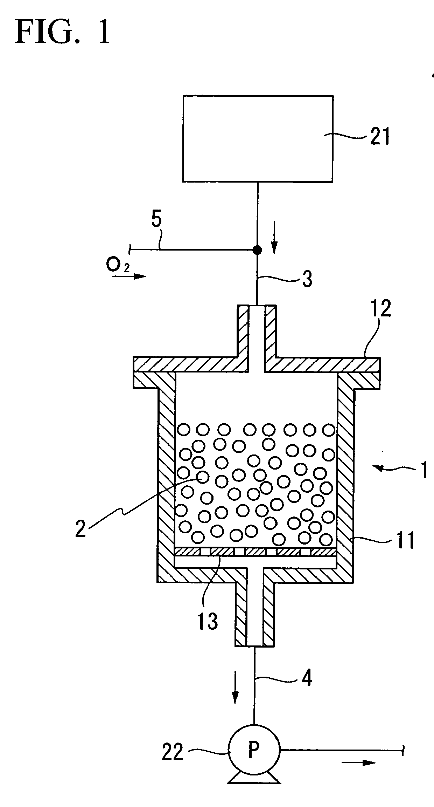

As shown, for example, in Fig. 1, the exhaust gas treatment device of the present invention is composed of a reaction removal unit 1, an exhaust gas treatment agent 2 composed of calcium oxide filled into this reaction removal unit 1, a feed line 3 for feeding exhaust gas to be treated into reaction removal unit 1, a discharge line 4 for discharging exhaust gas from which harmful gas components have been removed from reaction removal unit 1, and an oxygen supply line 5 connected to feed line 3 for supplying oxygen to reaction removal unit 1.

Reaction removal unit 1 is composed of a vessel 11 and a cover 12 for covering the opening of this vessel 11. Vessel 11 is made from a corrosion-resistant material such as alumina or quartz, and has a bottomed, cylindrical shape. The opening of discharge line 5 is formed in the bottom thereof, a strainer 13 is provided, and exhaust gas treatment agent 2 filled inside is prevented from escaping.

Cover 12 is made from a corrosion-resistant material such as alumina or quartz, and has a plate-like shape. Cover 12 is removably attached to vessel 11 and enables exhaust gas treatment agent 2 filled inside vessel 11 to be replaced as necessary. In addition, the opening of feed line 3 is formed in cover 12.

Although the aforementioned particulate treatment agent 2 is filled into vessel 11, treatment agent 2 is filled so that the filling rate of the treatment agent is 30 to 70% by volume so as not to obstruct the smooth flow of exhaust gas.

Exhaust gas from a semiconductor production device 21 passes through feed line 3, enters the inside of reaction removal unit 1, harmful gas components are removed according to the previously described chemical reactions, and the purified exhaust gas is discharged outside the system through discharge line 4 as a result of being suctioned by a pump 22.

In addition, in the case exhaust gas components requiring oxygen for the removal reaction, such as SiH₄ or PH₃, are contained in exhaust gas from semiconductor production device 21, a suitable amount of oxygen is sent from oxygen supply line 5 into reaction removal unit 1 together with the exhaust gas.

Since this type of exhaust gas treatment agent is porous and has an extremely large substantial surface area, the contact area with harmful gas components is large and the amount of exhaust gas treated per unit amount of treatment agent can be increased, thereby making it possible to treat a large amount of exhaust gas with a small amount of treatment agent.

In addition, the exhaust gas treatment agent following treatment is in the form of CaF₂ (fluorite), CaSiO₃ (calcium silicate) and Ca₂(PO₄)₃ (calcium phosphate). These calcium compounds are stable and harmless, do not require any post-treatment, and can be reused for fluorine raw materials, glass raw materials, phosphorous raw materials and so forth.

Moreover, since the structure of the treatment device is simple and special equipment is not required, production costs can be reduced.

Next, an explanation is provided of the superiority of exhaust gas treatment using a treatment agent in which the abundance ratio of calcium hydroxide is 20% by weight to less than 70% by weight.

The densities of CaO and Ca(OH)₂ are 3.25 g/cm³ and 2.24 g/cm³, respectively. In addition, the density of CaF₂, for example, formed by reaction of the Ca agent, is 3.18 g/cm³. Here, if the abundance ratio of the calcium hydroxide is less than 20% by weight, the reaction efficiency decreases since the density of the Ca agent (mixture of CaO and Ca(OH)₂) is about equal to the density of the CaF₂ formed. In addition, in the case F components are removed with the Ca compounds, the molar volume of the products and Ca compounds is important. Namely, in the case the molar volume of the Ca compounds is greater than that of CaF₂, tensile stress is generated on the surface due to the reaction occurring on the surface. Although this results in the formation of microcracks, the reaction with F proceeds since fresh Ca compounds appear on the surface. However, in the case the molar volume is smaller than that of CaF₂, it is difficult for microcracks to form due to the generation of compressive stress on the surface. For example, the molar volume of CaF₂ is 24.6 cm³/mol, while that of CaO and Ca(OH)₂ is 17.3 and 31.7 cm³/mol, respectively. Here, if the ratio of Ca(OH)2 is less than 20% by weight, the molar volume of the Ca compounds is nearly equal to that of CaF₂, thereby causing a decrease in reaction efficiency.

Moreover, in the case the product is a chloride, reaction efficiency decreases since the proportion of Ca(OH)₂ decreases considerably as a result of OH groups associating with CaCl₂ due to the deliquescence thereof. On the other hand, if the abundance ratio of calcium hydroxide exceeds 70% by weight, not only does reaction efficiency decrease considerably due to oxidation of the calcium oxide agent, but also a large amount of moisture is formed. Consequently, a moisture removal device is required. In addition, since calcium oxide agents containing less than 20% of Ca (OH) ₂ are classified as hazardous substances in the Fire Service Law, the abundance ratio of calcium hydroxide is preferably 20% by weight or more.

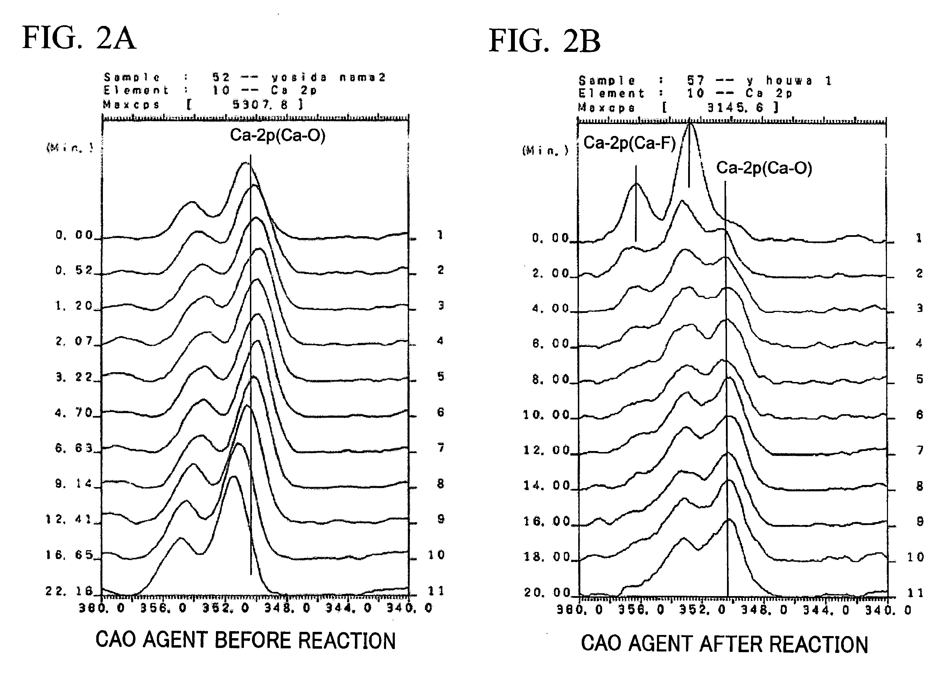

Surface analyses were carried out using X-ray photoelectron spectroscopy (XPS) before and after reactions between COF₂ gas and calcium oxide agents in which the abundance ratio of calcium hydroxide is 20% by weight or more, less than 20% by weight, in excess of 70% by weight and less than 70% by weight. Examples of those results are shown in Figs. 2A to 7B.

Fig. 2A shows the Ca2p spectrum before reaction between a CaO agent containing less than 20% by weight Ca (OH)₂ and COF₂, while Fig. 2B shows the Ca2p spectrum after that reaction. Furthermore, in Figs. 2A to 7B, etching time is indicated on the vertical axis, and this corresponds to the depth of the CaO agent. The Ca2p spectrum before reaction has a peak at about 350.4 eV due to bonding with an oxygen (O) component. In the Ca2p spectrum after the reaction, the peak locations of the polar surface can be seen to shift to higher energy levels (352. 4 and 358 eV), and bonding between Ca and F can be seen to be occurring at this location.

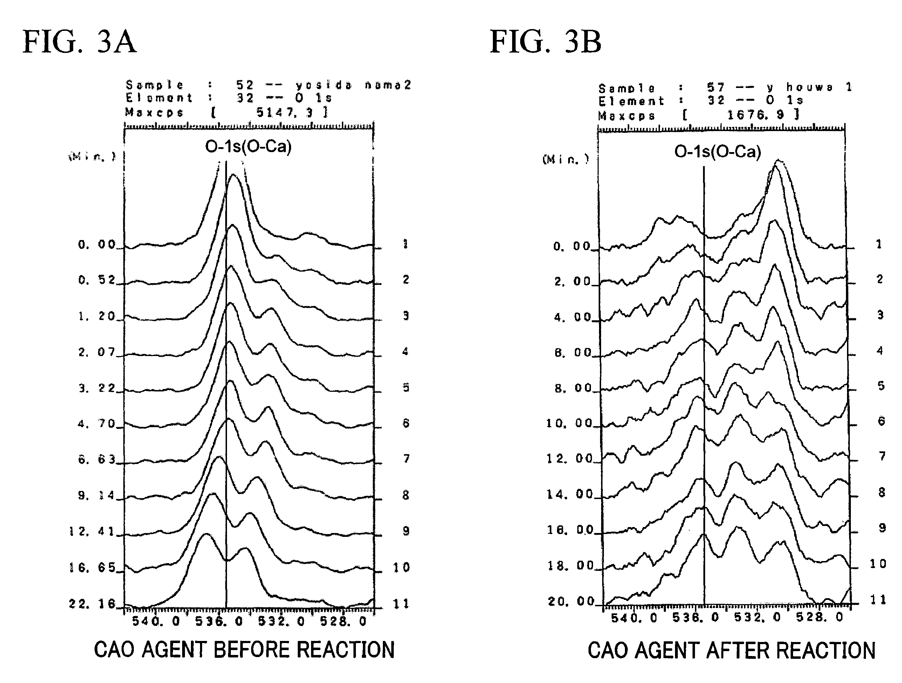

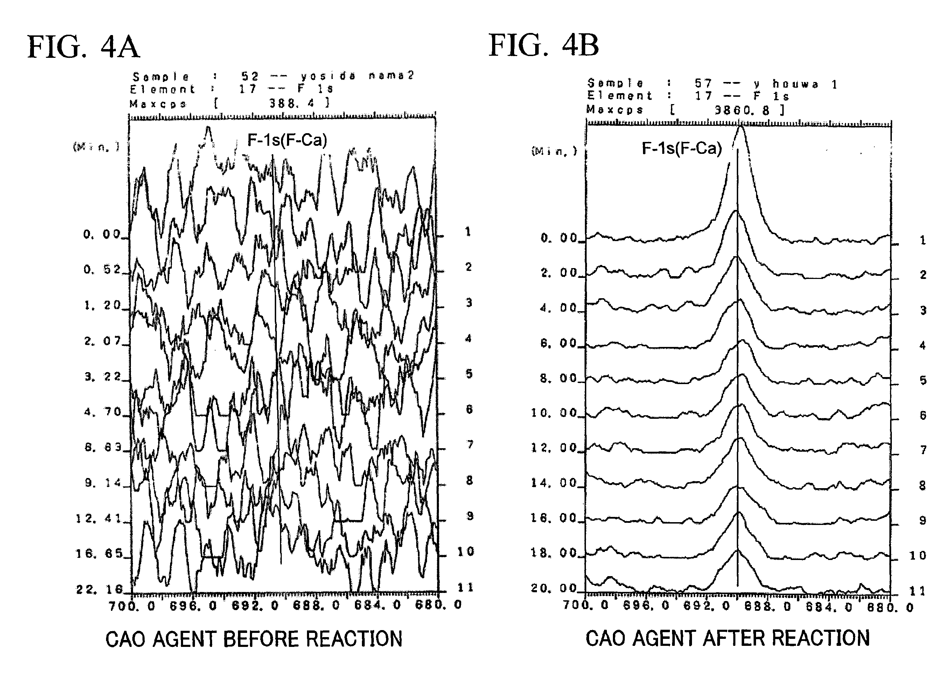

Internally however, a peak is detected for Ca bound to O, while the reaction between Ca and F can be seen to not be proceeding internally. Fig. 3A shows the O1s spectrum prior to reaction of the same sample, while Fig. 3B shows the O1s spectrum after reaction of the same sample. Since an O1s peak is detected internally in the same manner as Fig. 2B, bonding between Ca and O can be understood to be present. Moreover, Fig. 4A shows the F1s spectrum before reaction of the same sample, while Fig. 4B shows the F1s spectrum after reaction of the same sample. There are no peaks attributable to F present before the reaction.

After the reaction, although an F1s peak bound to Ca is observed at the location of 690 eV, that location is observed to be about 1 eV lower in energy than the normal peak location of CaF₂, thus suggesting that the bonding between Ca and F is comparatively weak. In addition, since the maximum peak intensity is about 3800 cps, peak intensity was also comparatively weak.

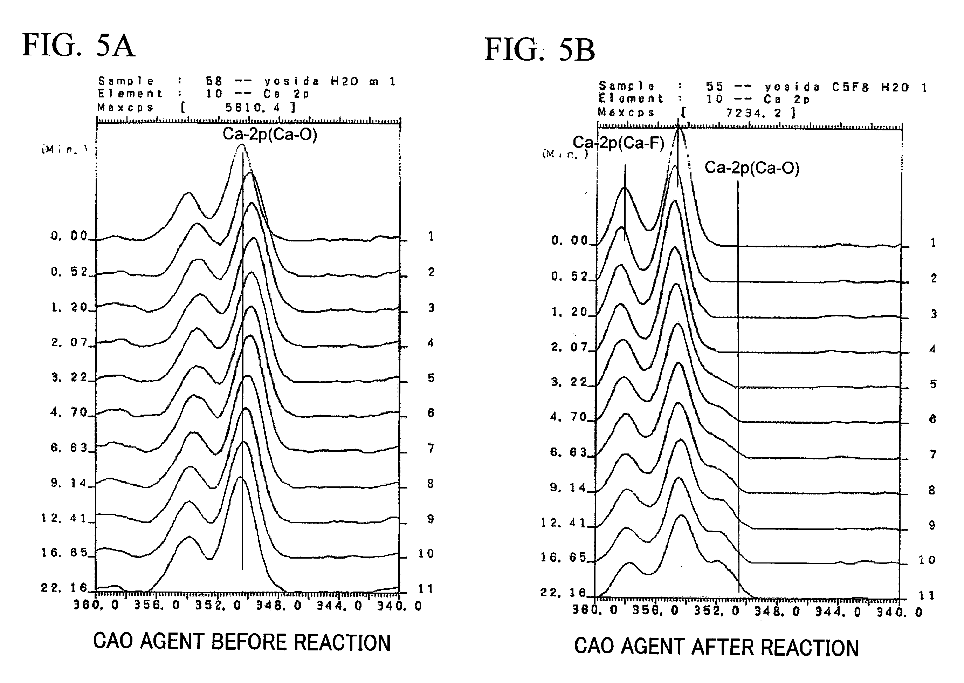

Fig. 5A shows the Ca2p spectrum before reaction between a CaO agent containing 20% by weight or more of Ca(OH)₂, and more specifically, about 22% by weight, and COF₂, while Fig. 5B shows the Ca2p spectrum after the reaction between the CaO agent containing about 22% by weight of Ca(OH)₂ and COF₂. Although the location of the Ca2p peak before the reaction is the same as in Fig. 2A, the location after the reaction has shifted to a higher energy level than bonding with F.

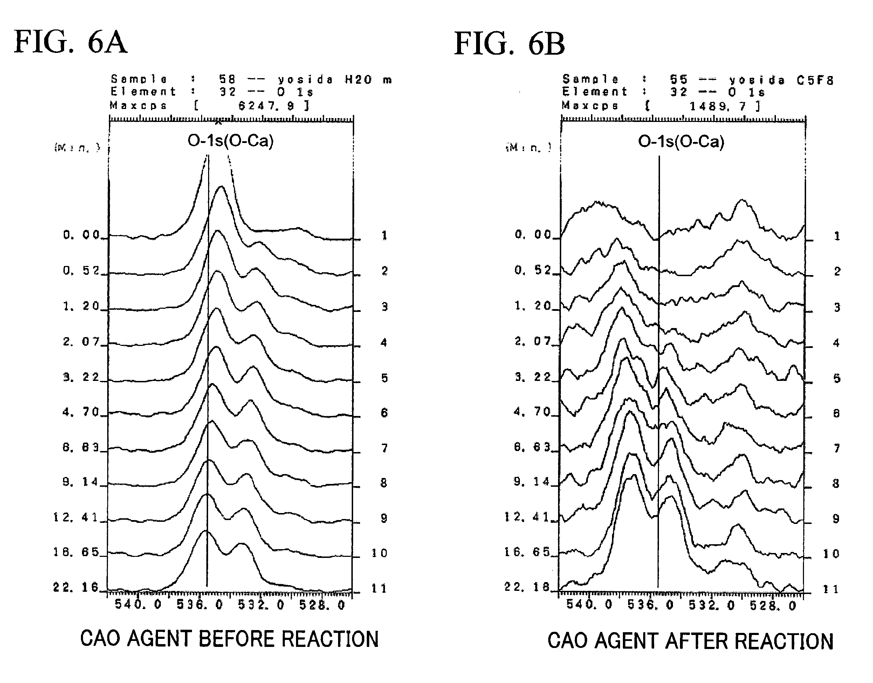

In addition, peaks attributable to bonding between Ca and O were also not observed even after 20 minutes of etching by Ar sputtering. Fig. 6A shows the O1s spectrum of the same sample as Fig. 5A, while Fig. 6B shows the O1s spectrum of the same sample as Fig. 5B. In the sample after the reaction, the O1s spectrum is hardly observed at all in the vicinity of the surface, and the O1s peak that appeared as a result of etching for about 7 minutes had also shifted to a higher energy level.

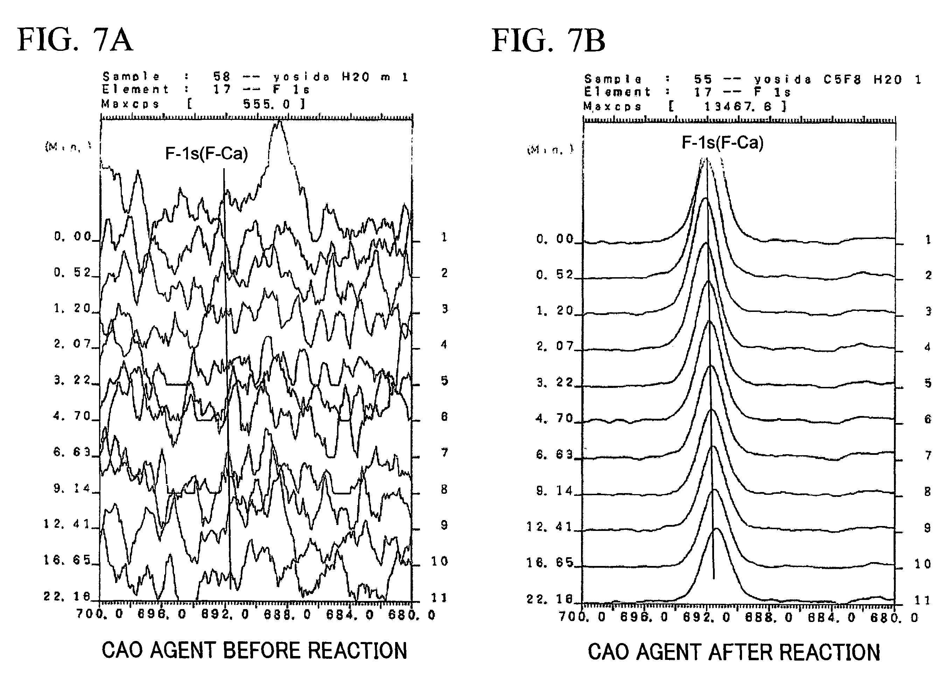

This was presumed to be the result of being affected by F having a larger electrical negativity than O. Moreover, Fig. 7A shows the F1s spectrum of the same sample as Fig. 5A, while Fig. 7B shows the F1s spectrum of the same sample as Fig. 5B. In the sample after the reaction, the F1s peak having a maximum peak intensity of about 13500 cps was observed at the location of 690.8 eV, and that location remained nearly constant regardless of the etching time. On the basis of this finding, reactions with halides such as COF₂ were determined to proceed to the inside as a result of the CaO containing 20% by volume or more of Ca(OH)₂.

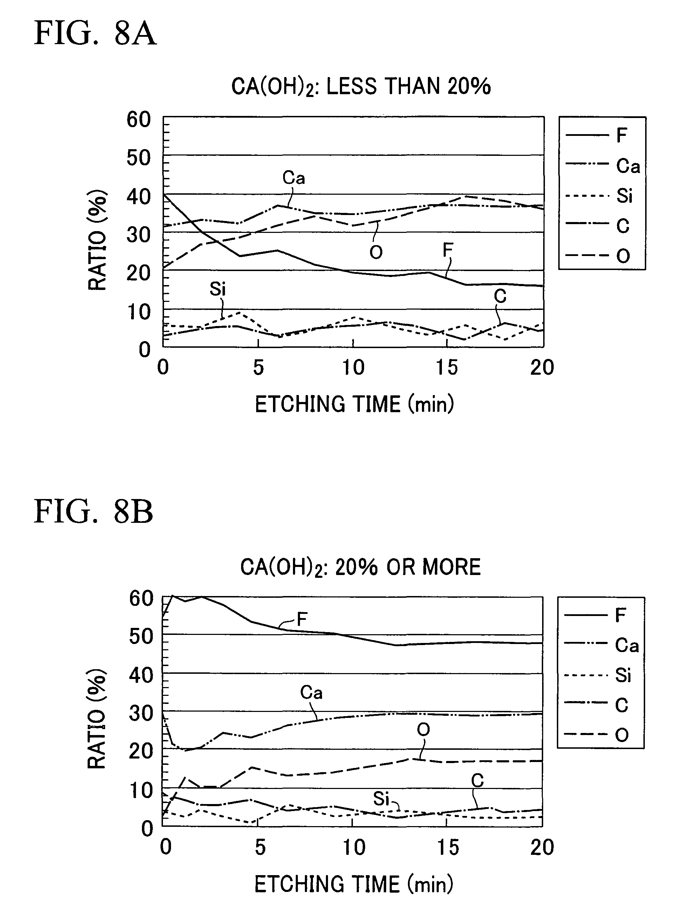

Fig. 8A shows the data of the aforementioned Figs. 2A to 4B in the form of the distribution of each component in the direction of agent depth, while Fig. 8B shows the data of the aforementioned Figs. 5A to 7B in the form of the distribution of each component in the direction of agent depth. Etching time is indicated on the vertical axis in each graph, and this corresponds to agent depth. In the case of the agent shown in Fig. 8A containing less than 20% by weight of Ca(OH)₂, although F is observed on the surface, the ratio thereof can be seen to decrease nearly proportionately to depth. On the other hand, in the case of the agent shown in Fig. 8B containing 20% by weight or more of Ca(OH)₂, the ratio of the F component is about 50% by weight, and CaF₂ and CaO (including Ca (OH)₂) within the agent are shown to be present at ratios of about 24% by weight and 18% by weight, respectively.

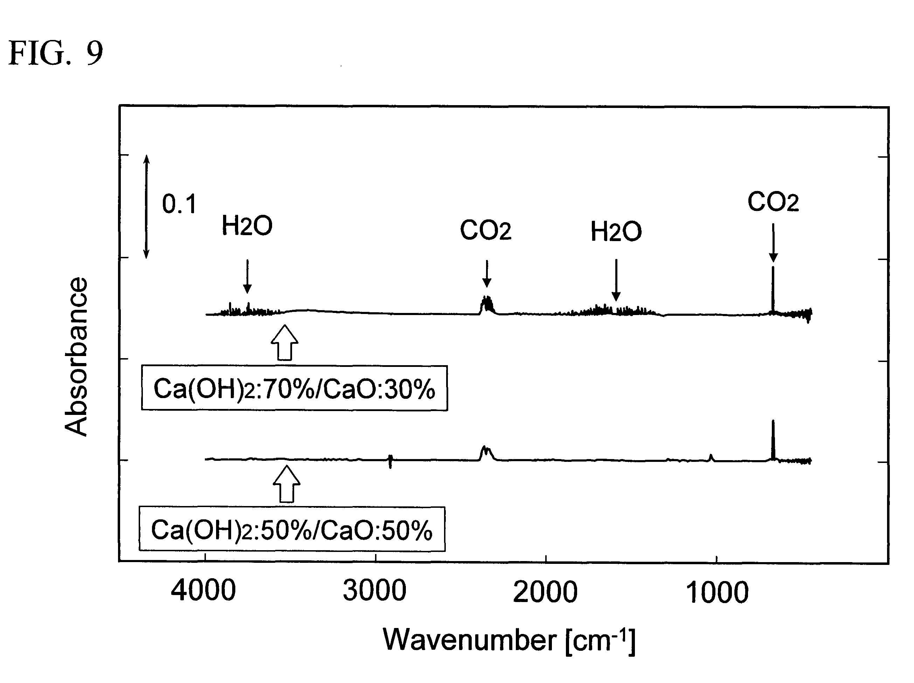

Fig. 9 shows the results of measuring impurities at the Ca agent outlet. COF₂ gas was introduced at the Ca agent entrance, and FT-IR (cell length: 1 cm) was used to measure impurities. In the case of a ratio of CaO to Ca(OH)₂ of 1:1, the observed impurities consisted only of CO2. On the other hand, in the case the ratio of Ca(OH)₂ was made to be 70% by weight, absorption peaks were observed at wave numbers of about 1640 cm⁻¹ and about 3700 cm⁻¹. These peaks indicate moisture, and demonstrate that water is formed by the reaction between a Ca agent containing 70% by weight of Ca(OH)₂ and a halogen gas.

Next, an explanation is provided for the preferable range of the void fraction being 10 to 50% by volume.

The void fraction is represented by the ratio of the volume of all micropores to the apparent volume of all secondary grains, and if the void fraction is less than 10% by volume, together with the specific surface area decreasing considerably, the entrance of harmful gas components into the spaces between the grains is inhibited, and as a result, the reaction efficiency of the agent decreases. On the other hand, if the void fraction exceeds 50% by volume, bonding between secondary grains weakens, and as a result, the problem of increased susceptibility to dust generation occurs.

In the case of forming Ca(OH)₂ on the surface of CaO and making the ratio of Ca (OH)₂ 20% by weight, the apparent volume increases by about 17% based on the volume before formation, and the void fraction increases. Here, the void fraction as determined from the metal bonding radius and the lattice constant of Ca is about 15% by volume. As a result, it becomes easier for harmful gas components to enter the grains through the spaces formed, thereby resulting in an increase in reaction efficiency.

In addition, in the case of a ratio of Ca(OH)₂ of 70% by weight, although the apparent volume increases by about 67% by volume as compared with CaO, the void fraction is about 48% by volume. On the other hand, if the ratio of Ca (OH)₂ exceeds 70% by weight, there is increased susceptibility to generation of dust. In the case of measuring the dust generation rate using a shaking screen, although dust generation of about 0.1% by volume is observed as a result of shaking for 5 minutes in case of containing about 50% by weight of Ca(OH)₂, if the amount of Ca(OH)₂ exceeds 70% by weight, the dust generation rate under the same conditions increases to 1% by volume. Namely, the strength of the agent decreases considerably.

Next, an explanation is provided of the preferable range of porosity being 30 to 70% by volume.

Depending on the form of the agent, the filling density of the Ca agent is 1.3 to 1.9 g/cm³. If the filling density increases, the effective passage speed of the exhaust gas increases, resulting in an increase in the masstransfer zone length, which together with causing a decrease in the utilization efficiency of the agent, also results in the problem of increased pressure loss. Consequently, the SV value of the reaction vessel filled with agent is preferably 1000 to 5000 Hr⁻¹. In order to obtain this SV value, a porosity of 30 to 70% by volume is required.

In addition, the reaction efficiency of the agent is dependent on the flow rate of the gas passing through the reaction vessel, and if the gas flow rate exceeds 10 m/min, in addition to the reaction efficiency decreasing, pressure loss becomes large. On the other hand, if the gas flow rate is 2 m/min or less, although pressure loss is reduced, masstransfer zone length becomes shorter and utilization efficiency of the agent can be improved, since it is necessary to increase the aperture of the vessel, this causes an increase in the device installation area and an increase in device costs, thereby making this undesirable.

Next, an explanation is provided of the reason why an agent having a specific surface area of 1 m²/g or more is preferable.

In the case of a reaction between SiF₄ and the Ca agent, CaSiO₃ is formed on the surface and this CaSiO₃ cannot be removed with an F compound. Consequently, the calcium agent (Ca agent) of the present invention reacts to a depth of about 1 nm in the direction of depth, namely down to the third molecular layer. Thus, the specific surface area of the Ca agent is preferably 1 m²/g or more. A specific surface area of 20 m²/g or more is particularly preferable in the case of treating exhaust gas containing SiF₄.

The following indicates specific examples of the present invention.

### Example 1

Harmful components in exhaust gas discharged from a semiconductor production device were removed using the exhaust gas treatment device shown in Fig. 1.

An exhaust gas treatment agent composed of calcium compounds at a purity of 98% or more was used for exhaust gas treatment agent 2, and the main components thereof consisted of CaO at 50% by weight and Ca(OH)₂ at 50% by weight. This exhaust gas treatment agent 2 had a grain diameter of about 3 mm, specific surface area as calculated using the BET method of about 20 m²/g, and void fraction of 10% by volume. 20 kg of this exhaust gas treatment agent 2 were filled into vessel 11 of reaction removal unit 1 at a porosity of 40% by volume.

The aforementioned exhaust gas contained 2% COF₂, 0.7% SiF₄, 0.2% CF₄ and 1% C₂F₆ and other higher structure of fluorocarbons, and the exhaust gas was allowed to flow at a flow rate of 1000 SCCM. In addition, simultaneous to this, pure oxygen was supplied from oxygen supply line 5 to reaction removal unit 1 at a flow rate of 200 SCCM. Furthermore, the SV value and LV value as calculated from the diameter and length of vessel 11 used here were about 1750 Hr⁻¹ and about 6. 5 m/min, respectively.

When each component in the exhaust gas discharged from reaction removal unit 1 was measured by FT-IR, only CF₄ was detected at 8 ppm, while other harmful components were not detected. In addition, moisture was similarly below the measurement lower limit, and the addition of a moisture removal device in a later stage was determined to not be required. Furthermore, the total amount of harmful components which entered reaction removal unit 1 here was about 85 SCCM as F₂, while CF₄ detected at the outlet was about 0.01 SCCM as F₂. Thus, about 99.99% of the harmful components were determined to have been able to be removed in reaction removal unit 1.

In addition, the temperature of exhaust gas treatment agent 2 in vessel 11 of reaction removal unit 1 rose to a maximum of 65°C. The fluorine reaction efficiency of the calcium compounds at this time was determined. The fluorine reaction efficiency was calculated from the total amount of fluorine in exhaust gas entering the reaction removal unit, and the total amount of fluorine in the exhaust gas discharged from the reaction removal unit. As a result, the fluorine reaction efficiency of the calcium compounds was about 10%.

Moreover, as a result of determining fluorine reaction efficiency by heating the vessel to 400°C using a heater from outside the vessel to accelerate the reaction, the reaction efficiency was found to be about 40%.

### Example 2

Removal of only SiF₄ was investigated using the previously described exhaust gas treatment agent 2, namely an exhaust gas treatment agent composed of calcium compounds having a purity of 98% or more, and having for main components thereof CaO at 50% and Ca(OH)₂ at 50%. This exhaust gas treatment agent 2 had a grain diameter of about 3 mm, specific surface area as calculated using the BET method of about 20 m²/g, and void fraction of 10% by volume. 250 g of this exhaust gas treatment agent 2 were filled into vessel 11 of reaction removal unit 1 at a porosity of 40% by volume.

SiF₄ was contained in this exhaust gas at a concentration of 3%, and this exhaust gas was allowed to flow at a flow rate of 360 SCCM. Furthermore, the SV value and LV value as calculated from the diameter and length of vessel 11 used here were about 1350 Hr⁻¹ and about 2.2 m/min, respectively.

The amount of SiF₄ removed was calculated by measuring the amount of SiF₄ in exhaust gas discharged from reaction removal unit 1 by FT-IR. As a result, about 8. 5 L of SiF₄ were determined to be able to be removed. This value is equal to about 10% when expressed as the fluorine reaction efficiency.

### Comparative Example

With the exception of changing the specific surface area of exhaust gas treatment agent 2 to 0.7 m²/g, the amount of SiF₄ removed was calculated by measuring by FT-IR under the same agent conditions, filling conditions and exhaust gas conditions. As a result, about 300 cc of SiF₄ were determined to be able to be removed. Since the amount of SiF₄ discharged from semiconductor production processes is normally about 7 SCCM, this result indicates that an agent having a specific surface area of 0.7 m²/g can only be used for about 40 minutes, and if assuming a vessel at the practical level, namely increasing the vessel to a replacement cycle time of two months (50 days), a total of 450 kg of agent would be required. When this value is expressed in terms of reaction efficiency, the reaction efficiency becomes about 0.4%. Namely, this result means that the installation area of the device would become extremely large.

### INDUSTRIAL APPLICABILITY

The treatment agent of the present invention can be used to purify not only exhaust gas discharged from a semiconductor production device, but also exhaust containing similar harmful gas components.

## Claims

1. An exhaust gas treatment agent provided with a particulate and porous structure, comprising calcium hydroxide occupying at least a portion of the surface thereof, and calcium oxide occupying the remainder.

2. The exhaust gas treatment agent according to claim 1, wherein the calcium hydroxide accounts for 20 to 70% by weight of the exhaust gas treatment agent.

3. The exhaust gas treatment agent according to claim 1, wherein the specific surface area is 1 m²/g or more.

4. The exhaust gas treatment agent according to claim 1, wherein the void fraction is 10 to 50% by volume.

5. An exhaust gas treatment method comprising contacting the exhaust gas treatment agent according to claim 1 with exhaust gas containing a hydride and/or halide of an element belonging to group IIIb, group IVb or group Vb of the periodic table in a gaseous state.

6. An exhaust gas treatment device comprising a reaction removal unit filled with the exhaust gas treatment agent according to claim 1.

7. The exhaust gas treatment device according to claim 6, wherein the exhaust gas treatment agent is filled at a porosity of 30 to 70% by volume.
